# EUROPEAN PATENT APPLICATION

(11) **EP 4 610 030 A1**
(43) Date of publication of application: **03.09.2025**
(21) Application number: 24160698.7
(22) Date of filing: 29.02.2024
(51) Int. Cl.: B29C 70/30, G06F 30/20, G06F 113/26

(54) **METHOD FOR MODELLING A COMPOSITE PART**

(71) Applicant: Airbus Operations GmbH, 21129 Hamburg (DE)
(72) Inventor: Boyksen, Jan, Stade (DE); Pourabdollah, Pezhman, Stade (DE); Finger, Lennart, Stade (DE); Frerich, Tim, Stade (DE); Eschen, Henrik, Stade (DE); Höfer, Raphael, Stade (DE)

(57) **Abstract**

Disclosed are a method for modelling a composite part, comprising the steps: preparing a model of the composite part having at least one ply with a single or multiple curved in-plane fibre orientation; and modifying the model iteratively, thereby modifying the fibre orientation until a weight reduction of the model is achieved compared to a preceding model maintaining predetermined mechanical properties of the composite part, and a composite part.

## Description

The present invention refers to a method for modelling a composite part made from composite material, and a composite part.

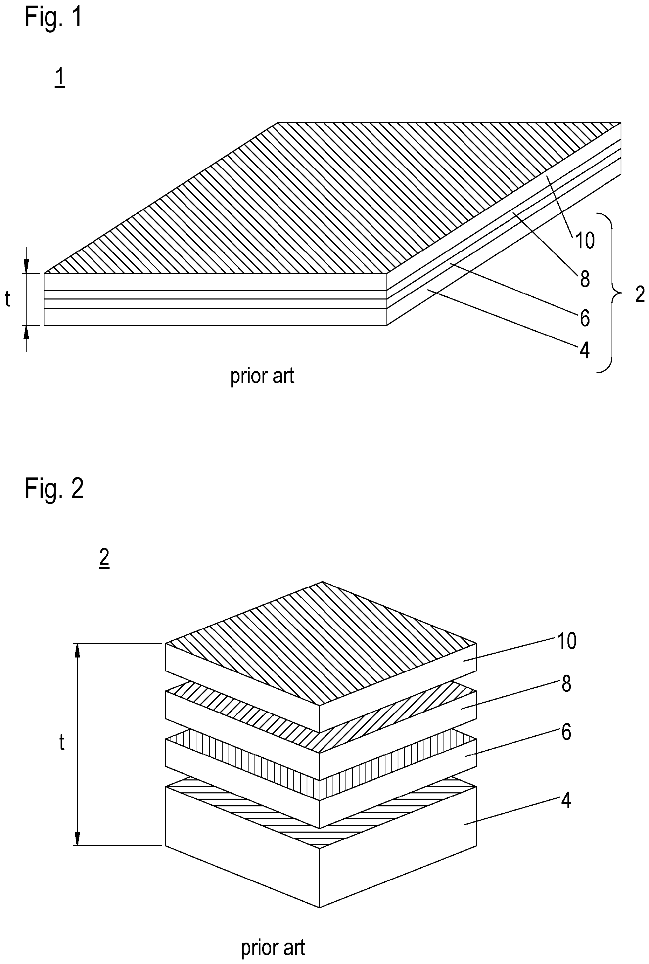

This invention relates to the field of composite materials made either from CFRP-tape with a thermoplastic or thermoset matrix or from dry fibre material. It furthermore relates to the ply or tow deposition of said composite material. In different industries, preferred ply layups haven been established. For instance, aircraft parts, which are rather strictly due to safety requirements, are made from a similar ply layup composing of 0°,90°,45° and -45° plies. These are laid up manually, by ATL or AFP, at least for aircraft components. By adjusting the ratio and stacking between these plies, the part behaviour can be tailored to a specific load case. This approach is however limited by the unidirectionality of those plies, as they are always oriented in the same direction. Such known composite part 1 is illustrated in Figures 1 and 2. The known composite part 1 is made from a ply stack 2 comprising four plies 4, 6, 8, 10. Each ply has a different monoaxial fibre orientation and a defined thickness. Here, the first ply is a 0° ply 4, the second one is a 90° ply 6, the third one is a 45° ply 8 and the third one is a -45° ply 10.

What could be considered prior art is the topology optimization approaches of state of the art finite-element tools such as HyperWorks. One approach for defining stiffness variation in structures is the discrete fibre angle representation. This method extends the concept of a multi-patch laminate to define laminates locally at each point in the structure. Consequently, specific points within the discretized structure have defined fibre angles and stacking sequences. Typically, this discretization aligns with the underlying structural analysis method, like the finite element method (FEM). With this approach, ensuring fibre continuity is not guaranteed. The end result is usually some sort of vector field with each element having a specific optimum fibre orientation, however these do not always match up with the adjacent elements, so no coherent "path" can be found to lead through all the elements directions.

It is an object of the present invention to provide a method for modelling a composite part and an optimised composite part.

The object is achieved by a method with the features of claim 1, and by a composite part with the features of claim 9. Advantageous embodiments are disclosed in the dependent claims, the description and the figures.

According to the invention, an inventive method for modelling a composite part, comprises the following steps:
- Preparing a model of the composite part having at least one ply with a single or multiple curved in-plane fibre orientation; and
- Modifying the model iteratively, thereby modifying the fibre orientation until a weight reduction of the model is achieved compared to a preceding model maintaining predetermined mechanical properties of the composite part.
The inventive method relates to the possibility of using variable angle tow (VAT) orientations within a ply. For example, a steering / bent tow from an AFP machine may be able to transfer the loads more directly and in a way that is suitable for the part. In particular the invention relates to a method to determine how such a tow is supposed to be oriented while incorporating a structural analysis to achieve the best possible result. The method according to the invention enable the optimization of fibre angles, thereby unlocking the ability to attain desired stiffness and strength properties effectively. At least one variable tow angle ply/layer is generated to achieve a further optimized design tailored to each specific load case. This result in a lower weight compared to quasi-isotropic layups, to a certain desired bending shape, thereby keeping desired strength properties. The invention entails an all-encompassing process chain, commencing with composite design which can culminate in the production of the final manufactured part. Optimization algorithms can be used to find the optimal distribution of fibre angles in a laminate to achieve desired stiffness and strength properties. Physics-based analyses, such as finite element analysis (FEM), can be used to evaluate the performance of the design and provide feedback to the optimization algorithm. Instead of path planning, which is based on a large number of vectors between which common manufacturable paths must be found, the inventive master spline concept works in reverse. At least one fibre path is first proposed and applied to the mechanical problem. The performance of this path design is then evaluated.

The model can be made from a ply stack, comprising the ply with the single or multiple curved in-plane fibre orientation; and at least a further ply having a different fibre orientation. By modelling a ply stack, the composite part can be adjusted optimally to different mechanical properties.

The weight can further be reduced by modifying a thickness of at least one ply. Preferably, the thickness of each ply is modified. By means of this, every ply is taken into account during weight optimization.

In order to ensure that the ply with the single or multiple curved in-plane fibre orientation remains a part of the composite part, a minimum thickness of the ply is kept larger than zero.

Preferably, load cases are applied to the model during the optimisation procedure. By means of this, the entire ply stack is considered and not only some of the plies.

The manufacturing of the ply with single or multiple curved in-plane fibre orientation can be simplified by reproducing s single or multiple curved in-plane fibre path over the entire ply.

Preferably, manufacturing constraints are taken into account when modifying the single or multiple curved in-plane fibre orientation. By means of this, the manufacturing is further simplified as it is guaranteed that the optimised ply stack can be manufactured practically. This approach avoids the cumbersome determination of fibre paths according to theoretical "ideal" vector fields and moves closer to a design for manufacturing approach by generating fibres fitting with production boundary conditions (steering radii, etc.). In particular, if the optimisation starts from manufacturable paths and adjusts them to fit as well as possible with the load case this problem is mitigated. It may not be the most mathematically perfect result, but it ensures manufacturability and can be considered the best possible result under specific manufacturing contraints.

The model can be used as manufacturing data for a manufacturing machine adapted to manufacture the composite part. By means of this, the generated ply stack can be used directly for manufacturing. Any problem due to date mitigation does not occur.

A preferred composite part is manufactured via the inventive method. Such a composite part has reduced weight compared to traditional generated ply stacks, thereby keeping the mechanical strength.

In what follows, a preferred embodiment of the present invention is explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Figure 1: a composite part having a ply stack according to the prior art;
- Figure 2: the play stack of the known composite part shown in Figure 1;
- Figure 3: an exemplary composite part having a ply stack according to the prior art;
- Figure 4: the play stack of the inventive composite part shown in Figure 3.

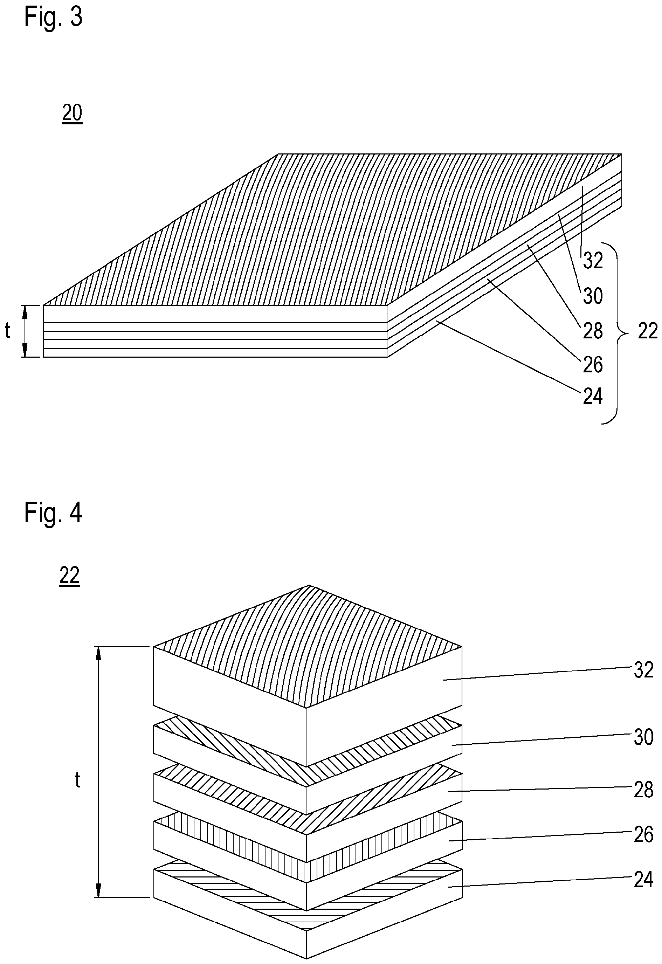

In Figure 3, an inventive composite part is shown.

The composite part can be made either from CFRP-tape with a thermoplastic or thermoset matrix or from dry fibre material. The composite part 20 is made from a ply stack 22 as shown in Figure 4. The ply stack 22 comprising several plies 24, 26, 28, 30 with monoaxial fibre orientations and at least one ply 32 having a single or multiple curved in-plane fibre orientation. In the following, the ply 32 having a single or multiple curved in-plane fibre orientation is called variable ply 32. Here the variable ply 32 has a single curved in-plane fibre orientation.

The plies are laid up manually or, preferably automatically by automated tape laying (ATL) or by automated fibre placement (AFP).

The composite part 20 has the same shape, function and mechanical properties as the known composite part 20 shown in Figure 1 and 2. Both composite parts 1, 20 have the same thickness t (height), but different weights and different number of plies 4, 6, 8, 10 and 24, 26, 28, 30, 32. Although the inventive composite part 20 comprises one more ply 32, i.e. the variable ply 32, than the known composite part 1, the inventive composite part 20 has a reduced weight compared to the known composite part 1 having one ply 4, 6, 8, 10 less.

For the sake of illustration, here the inventive composite part 20 comprises the same initial ply stack 2 as the known composite part 1. This means, the first ply 24 is a 0° ply, the second one 26 is a 90° ply, the third one 28 is a 45° ply and the fourth one 30 is a - 45° ply. In addition, the variable ply 32 is add to the initial ply stack 2.

Due to this, the thickness of each monoaxial ply 24, 26, 28, 30 can vary compared to the respective ply 2, 4, 6, 8 of the known composite part 1. However, the overall thickness t of the inventive composite part 20 is not larger than the thickness t of the known composite part 1. The optimal thickness of each ply 24, 26, 28, 30, 32 and an optimal curved in-plane fibre orientation is achieved iteratively by applying load cased to the (joined) ply stack 22. Thereby, the modelling of the ply stack 22 is stopped, when a weight reduction is reached, whereby predetermined mechanical properties are maintained.

The inventive method to model such ply stack 22 is based on an iterative, self-contained cycle. The self-contained cycle aims to generate and optimize feasible fibre path orientations. On one side, fibre paths are geometrically defined inside the input CAD data of the composite part to be developed. Parallel to the design of the composite part, a mesh is generated for FE-Analysis and optimization. Within this, path generation is linked to current FEM programs and paths are automatically parsed and evaluated.

After the optimization goal has been reached, the mechanically most sensible paths can then be used for the further development process. A variable-axial position can now be created for a mechanical problem defined in a finite element file. Here, a variable angle tow ply (ply having a single or multiple in-plane curved fibre orientation), which can be locally optimized in its tow angle is introduced. The definition of the FEM file then also allows further sub-optimizations. Complex optimizations regarding a topology, layer thicknesses, shape could also be stored in this file. This means that further parameters can be introduced into the overall optimization function.

In other words, a method for modelling a composite part, comprising the steps:
- Preparing a model of the composite part 20 having at least one variable ply 32; and
- Modifying the model iteratively, thereby modifying the fibre orientation of the variable ply 32 until a weight reduction of the model is achieved compared to a preceding model maintaining predetermined mechanical properties of the composite part 20.

It should be noted that the composite part 20 can be made only from the variable ply 32. Alternatively, the composite part 20 can be made from a ply stack 22 comprising the variable ply 32 and at least a further ply 24, 26, 28, 30 having a different fibre orientation as shown in Figure 3 and 4.

During modelling, load cases are applied to the single ply 32 or to the ply stack 22, thereby the thicknesses of each ply 24, 26, 28, 30, 32 and the curved fibre orientation is adjusted. In order to avoid that the variable ply 32 is cancelled during modelling, its minimum thickness is set larger than zero.

If the optimisation goal is reached, if in particular a weight reduction of the modelled composite part 20 has been reached thereby maintaining predetermined mechanical properties, the model data are used as manufacturing data for a manufacturing machine, for instance an AFP machine (or ATL machine), such that the composite part 20 can be manufactured directly. In order to make sure that the manufacturing machine is able to manufacture the single or multiple curved in-plane fibre orientation, manufacturing constraints of the manufacturing machine are taken into account directly at the beginning when the curved in-plane fibre orientation is defined initially. In a preferred embodiment, the curved fibre orientation is defined by s single fibre path which is reproduced over the entire ply.

Disclosed are a method for modelling a composite part, comprising the steps: preparing a model of the composite part having at least one ply with a single or multiple curved in-plane fibre orientation; and modifying the model iteratively, thereby modifying the fibre orientation until a weight reduction of the model is achieved compared to a preceding model maintaining predetermined mechanical properties of the composite part, and a composite part.

### Reference Signs

### Prior art

- 1: composite part
- 2: ply stack
- 4: first ply
- 6: second ply
- 8: third ply
- 10: fourth ply

### Invention

- 20: composite part
- 22: ply stack
- 24: first ply
- 26: second ply
- 28: third ply
- 30: fourth ply
- 32: fifth ply

- t: thickness (height)

## Claims

1. A method for modelling a composite part (20), comprising the steps:
• Preparing a model of the composite part (20) having at least one ply (32) with a single or multiple curved in-plane fibre orientation; and
• Modifying the model iteratively, thereby modifying the fibre orientation until a weight reduction of the model is achieved compared to a preceding model maintaining predetermined mechanical properties of the composite part (20).

2. The method according to claim 1, wherein the model is made by modelling a ply stack (22), comprising
• the ply (32) with the single or multiple curved in-plane fibre orientation; and
• at least a further ply (24, 26, 28, 30) having a different fibre orientation.

3. The method according to any of the preceding claims, wherein a thickness of at least one ply (24, 26, 28, 30, 32) is modified.

4. The method according to any of the preceding claims, wherein a minimum thickness of the ply (32) with the single or multiple curved in-plane fibre orientation is kept larger than zero.

5. The method according to any of the preceding claims, wherein load cases are applied to the model.

6. The method according to any of the preceding claims, wherein the single or multiple curved in-plane fibre orientation is defined by a single fibre path which is reproduced over the entire ply (32).

7. The method according to any of the preceding claims, wherein manufacturing constraints are taken into account when modifying the single or multiple curved in-plane fibre orientation.

8. The method according to any of the preceding claims, wherein the model is used as manufacturing data for a manufacturing machine adapted to manufacture the composite part (20).

9. A composite part (20) manufactured via a method according to one of the preceding claims.
